# DEMANDE DE BREVET EUROPEEN

(11) **EP 1 743 914 A2**
(43) Date de publication de la demande: **17.01.2007**
(21) Numéro de dépôt: 06016516.4
(22) Date de dépôt: 14.02.2001
(51) Int. Cl.: C08J 3/22, C08L 23/12

(54) **Utilisation de polypropylènes isotactiquess de très grande fluidité pour la préparation de concentrés de charges utilisables dan les thermoplastiques de type oléfinique, concentrés de charges et thermoplastiques ainsi obtenus**

(30) Priorité: 14.02.2000 FR 0001788
(62) Demande divisionnaire de: 01907801.3
(71) Demandeur: OMYA DEVELOPMENT AG, 4665 Oftringen (CH)
(72) Inventeur: Blanchard, Pierre, 01600 Reyrieux (FR); Husson, Maurice, 51000 Chalons en Champagne (FR)
(74) Mandataire: Richebourg, Michel François

(57) **Abrégé**

L'invention concerne l'utilisation de polypropylènes isotactiques de très grande fluidité pour la préparation de concentrés de charges utilisables dans les thermoplastiques de type oléfinique tels que le polypropylène, le polyéthylène et en règle générale : les polymères utilisés seuls ou en mélange, à base de monomères éthyléniques contenant 2 à 6 atomes de carbone polymérisés seuls ou en mélange.

L'invention concerne aussi les concentrés de charges ou mélange-maîtres préparés à partir de polypropylènes isotactiques de très grande fluidité.

L'invention concerne enfin les matières thermoplastiques chargées obtenues avec adjonction des polypropylènes sélectionnés selon l'invention, et les produits industriels fabriqués à partir, ou contenant, de telles matières thermoplastiques.

## Description

L'invention concerne l'utilisation de polypropylènes isotactiques de très grande fluidité pour la préparation de concentrés de charges utilisables dans les thermoplastiques de type oléfinique tels que le polypropylène, le polyéthylène et en règle générale : les polymères utilisés seuls ou en mélange, à base de monomères éthyléniques contenant 2 à 6 atomes de carbone polymérisés seuls ou en mélange.

Ces polypropylènes isotactiques de grande fluidité sont utilisés dans l'invention comme vecteur favorisant la dispersion ou la redispersion de matières minérales utilisées comme charges dans les polyoléfines.

L'invention concerne aussi les concentrés de charges préparés à partir de polypropylènes isotactiques de très grande fluidité.

L'invention concerne enfin les matières thermoplastiques chargées obtenues avec adjonction des polypropylènes sélectionnés selon l'invention, et les produits industriels fabriqués à partir, ou contenant, de telles matières thermoplastiques.

Il est connu d'utiliser des copolymères fluides pour la préparation de mélanges maîtres chargés, à haute concentration en charge(s), c'est-à-dire jusqu'à des taux de l'ordre de 90 % de carbonate de calcium ou/et de talc. Ces copolymères sont généralement des copolymères de l'éthylène, du propylène et quelques fois du butylène. Ils sont commercialisés sous le nom de VESTOPLAST^{™} par la Société Degussa-Hüls, ou de REXTAC^{™} par la Société Huntsman. Certains utilisent même des polypropylènes atactiques sous-produits issus de la production du polypropylène isotactique tels que notamment le polypropylène ALPHAMIN STH-L de la société Alphamin.

On connaît aussi le produit décrit dans le brevet WO 95/17441, qui consiste en un polypropylène amorphe.

Ces polymères précités de l'art antérieur sont des produits de spécialité, c'est à dire fabriqués en faibles quantités par des procédés spécifiques et donc onéreux, et dont par ailleurs le manque de dureté et les propriétés collantes (appréciées dans l'industrie des colles fusibles ou « hot-melts ») sont néfastes à l'application précitée.

De plus, ils détériorent les propriétés mécaniques finales dans les objets moulés, ou extrudés, produits à partir des mélanges maîtres les contenant.

Enfin, ils ont des points de ramollissement (environ 130 - 150°C) éloignés de la température à laquelle ils sont utilisés (polypropylène 230°C, polyéthylène 190°C). Ces différences de température entraînent des phénomènes indésirables tels que par exemple le «plate-out» ou dépôt à la filière bien connu de l'homme du métier en extrusion de profilés ou de films.

Le problème technique posé est double ; il s'agissait de sélectionner des polymères pouvant conduire à des concentrations très élevées de charges dans les mélanges maîtres, redispersables dans les différentes matrices polymériques utilisées dans l'industrie du plastique et ne dégradant pas les propriétés mécaniques des produits industriels obtenus au final après redilution, voire les augmentant.

Alors que l'art antérieur propose des mélanges maîtres préparés avec des copolymères de l'éthylène, du propylène et quelques fois du butylène, ou encore des polypropylènes atactiques (amorphes), l'invention propose l'utilisation de polypropylènes isotactiques, donc cristallins, de très grande fluidité, pour la préparation de concentrés de charges utilisables dans les thermoplastiques de type oléfinique.

On sait aujourd'hui utiliser des polymères de pourcentage de cristallinité supérieur à environ 50 %, de type polypropylène ou autre, pour une teneur en charges du mélange maître qui peut atteindre 80 %, mais ces produits sont très limités en fluidité, avec un indice de fluidité, encore dénommé MFI (Melt Flow Index), inférieur à environ 200 g/10 min (190°C - 10 kg - 1,05 mm) selon la norme NF T 51-620 modifiée.

Selon la norme NF T 51-620, l'indice de fluidité, encore dénommé MFI dans le reste de la demande, est la quantité de polymère et/ou copolymère, exprimée en grammes pour 10 minutes, qui s'écoule à une température choisie dans l'intervalle limité par des températures de ramollissement et de transformation sous une charge donnée normalisée (2,16 kg, 5 kg, 10 kg, 21,6 kg) au travers d'une filière de diamètre déterminé (2,09 mm à 2,10 mm) pendant un temps mesuré.

Dans la présente demande, la norme NF T 51-620 modifiée met en oeuvre, pour un polypropylène, une filière de diamètre égal à 1,05 mm et une température de 190°C.

Les machines existantes sont d'ailleurs adaptées à ce type de produits.

On connaît également le produit, décrit dans le brevet EP 0 203 017 qui a apporté une amélioration notable. L'amélioration provient d'une fluidité très nettement plus élevée, qui est supérieure à un MFI de 200 g/10 min (190°C - 10 kg - 1,05 mm), la concentration en charges étant centrée sur environ 80-90 % dans le mélange maître, et le pourcentage de cristallinité étant délibérément abaissé aux environs de 10 %, c'est à dire un produit amorphe.

On connaît également le produit décrit dans le brevet WO 95/17441, déjà mentionné ci-dessus, qui présente les inconvénients de conduire à des objets plastiques manquant de rigidité, en raison de problèmes apportés par la résine employée qui est collante et difficilement manipulable.

L'état récent de la technique (EP 0 203 017, WO 95/17441) suggère donc à l'homme du métier que, pour améliorer fortement la fluidité, ce qui est un impératif pour les produits modernes, tout en conservant la caractéristique, également essentielle, de forte concentration en charge(s) dans le mélange maître, il convient de réduire fortement la cristallinité.

On a aussi proposé (US 4,455,344) de préparer des granulés contenant :
a) de 60 à 80 parties en poids d'une charge minérale de dimension moyenne comprise entre 0,05 et 100 µm,
b) de 5 à 35 parties en poids d'une polyoléfine cristalline de dimension moyenne comprise entre 150 et 1000 µm,
c) et de 5 à 35 parties en poids d'un agent liant ayant un point de fusion inférieur d'au moins 10°C à celui de la polyoléfine cristalline.

Pour aboutir à de tels granulés, le procédé proposé par cet art antérieur consiste à recouvrir la polyoléfine cristalline et/ou les particules de la charge minérale au moyen de l'agent liant qui constitue une enveloppe assurant l'adhérence des particules entre elles. Un tel procédé ne conduit pas à la production d'un mélange pâteux cohérent, c'est-à-dire de même composition dans la totalité du mélange à la température de réalisation mais à l'obtention d'agglomérats incohérents, c'est-à-dire de composition généralement différente de l'un à l'autre et de dimensions irrégulières entraînant ultérieurement une mauvaise redispersion.

C'est d'ailleurs sans doute la raison pour laquelle, dans l'art antérieur, sont commercialisés des produits amorphes. De tels produits totalement amorphes sont plus facilement obtenus en recourant à des co- ou terpolymères, qui posent alors, comme certains produits antérieurs de très faible cristallinité, des problèmes de compatibilité avec les polyoléfines. Ces résines sont plus fluides à l'état fondu et leurs granulés ou agglomérats collent à l'état de présentation à froid et gênent donc considérablement leur manipulation et leur dosage.

Comme on le verra dans la description qui va suivre, l'invention est tout au contraire parvenue à sélectionner des polymères de type polypropylène isotactique, de fluidité élevée et supérieure ou égale à un MFI de 200 g/10 min, mesuré suivant la norme modifiée NF T 51-620 (190°C - 10 kg - 1,05 mm), de préférence supérieure à 500 g/10 min, mesuré suivant la norme modifiée NF T 51-620 (190°C - 10 kg - 1,05 mm), avec un pourcentage de cristallinité supérieur à environ 20 %, préférentiellement compris entre 30 % et 90 %, préférentiellement entre 50 % et 85 %, et conduisant à un mélange-maître de caractéristiques à la fois remarquables et surprenantes, c'est à dire :
- contenant une teneur en charges égale à 80 %,
- possédant une fluidité élevée, c'est à dire de MFI supérieur ou égal à 5 g/10 min (190°C - 5 kg - 2,09 mm) mesuré selon la norme NF T 51-620, de préférence supérieur ou égal à 8 g/10 min (190°C - 5 kg - 2,09 mm), et
- contenant au moins un polymère de type polypropylène isotactique présentant un pourcentage de cristallinité (appelé aussi indice d'isotacticité) supérieur à environ 20 %, préférentiellement compris entre 30 % et 90 %, très préférentiellement compris entre 50 % et 85 %, ce qui est donc l'inverse de la démarche de l'art antérieur.

Cet indice d'isotacticité représente, pour une température supérieure à 140°C, une énergie de fusion comprise entre 40 J/g et 138 J/g, telle que décrit par Kenji Kamide et Keiko Yamaguchi dans « Die Makromolekulare Chemie » (1972) Tome 162, page 222.

En effet, ce pourcentage de cristallinité ou indice d'isotacticité est déterminé, dans toute la présente demande, par la mise en oeuvre d'une méthode calorimétrique différentielle dite méthode DSC (Differential Scanning Calorimetry) à l'aide d'un appareil DSC 20 de la société Mettler-Toledo qui permet de mesurer l'énergie de fusion de chaque polymère et de déterminer l'indice par comparaison avec la valeur de 138 J/g qui correspond à un indice de 100 %. Cette méthode de détermination du pourcentage de cristallinité ou indice d'isotacticité sera appelée méthode DSC dans toute la suite de la présente demande.

En outre, ces mélange-maîtres permettent de maîtriser la dureté des grains, propriété jusque-là difficile à obtenir.

D'autres caractéristiques et avantages de l'invention seront mieux compris à la lecture de la description qui va suivre.

Il est bon de préciser que dans toute la présente demande, «polypropylène isotactique» désignera des polypropylènes isotactiques comportant un très faible pourcentage, inévitable et connu de l'homme du métier, de polymère ou partie de polymère atactique.

Ces polypropylènes isotactiques à très grande fluidité sont par ailleurs préparés par des méthodes classiques de polymérisation (EP 0 523 717 ou EP 0 600 461).

L'homme du métier comprendra que ces polymères soumis à une dégradation faisant intervenir une réaction radicalaire sont à considérer comme des équivalents techniques.

Ils sont caractérisés par leur fluidité ou MFI, mesuré suivant la norme modifiée NF T 51-620, qui est supérieure ou égale à 200 g/10 min. (température 190°C, charge 10 kg, filière de 1,05 mm) et par leur pourcentage de cristallinité supérieur à environ 30 %, mesuré par la méthode DSC.

L'une des caractéristiques de l'invention est donc également d'utiliser ces polypropylènes isotactiques obtenus par polymérisation directe. Ceci représente un avantage important voire décisif, car cette technique permet d'éviter les produits de recyclage ou les sous produits de polymérisation qui sont souvent la cause de la dégradation des propriétés mécaniques finales et des fluctuations de qualité difficilement industrialisables.

Un autre avantage décisif de l'invention est de permettre à l'homme du métier de concevoir, avec un très grand degré de liberté, exactement le produit dont il a besoin pour l'application précise considérée et/ou pour tenir compte des équipements industriels pré-existants. Cette faculté est offerte, comme on le verra ci-dessous, par la possibilité de conserver les avantages de l'invention tout en ajustant le degré de cristallinité et de dureté.

La présente invention concerne donc un procédé pour la préparation de mélanges maîtres ou concentrés de charges minérales fortement chargés en matières minérales, utilisables pour charger des matières thermoplastiques à l'aide desdites charges minérales, mettant en oeuvre des polymères ou des mélanges de polymères comme liant, caractérisé en ce que lesdits polymères ou mélanges de polymères :
- comprennent au moins un polypropylène isotactique de très grande fluidité, et
- ont un pourcentage de cristallinité communément appelé indice d'isotacticité supérieur à environ 20 %, préférentiellement compris entre 30 % et 90 %, très préférentiellement compris entre 50 % et 85 %, mesuré par la méthode DSC telle que précédemment décrite.

De plus, nous préciserons, pour la bonne compréhension des termes utilisés, les définitions relatives à l'isotacticité, aux polymères atactiques et syndiotactiques.

Ainsi l'isotacticité caractérise, dans un polymère oléfinique, la présence des substituants sur un seul côté du squelette carboné de la molécule alors qu'au contraire, un polymère atactique voit ses substituants répartis de manière aléatoire sur les deux côtés.

Un polymère syndiotactique présente quant à lui des séquences alternées de substituants, de chaque côté. Ces notions sont tout à fait familières pour l'homme du métier, mais l'on pourra se référer néanmoins à l'ouvrage Chimie Organique d'Allinger-Cava-Johnson- De Jongh-Lebel-Stevens (McGraw-Hill) 25.4, Stéréochimie des polymères, Polymères synthétiques, figure 25.1.

On pourra aussi se référer pour les généralités sur ce domaine, notamment en ce qui concerne les Tg (température de transition vitreuse) et les Tm (point de fusion) à l'article du Laboratoire des Hauts Polymères, Univ. Cath. de Louvain, France, avril 1990, et aux Techniques de l'Ingénieur, Monographies, polypropylènes, A 3 320.

Selon un mode de réalisation préféré, l'invention se caractérise en ce que le pourcentage de cristallinité du polymère ou desdits mélanges de polymère est compris entre 50 et 85 %, mesuré par la méthode DSC telle que précédemment décrite.

Selon un mode de réalisation préféré, ledit liant polymère ou mélange de polymères qui présente un MFI supérieur ou égal à 200 g/10 min, mesuré suivant la norme modifiée NF T 51-620 (190°C - 10 kg - 1,05 mm), présente un indice de fluidité supérieur à 500 g/10 min, mesuré suivant la norme modifiée NF T 51-620 (190°C - 10 kg - 1,05 mm).

Selon encore un mode de réalisation particulier, l'invention se caractérise en ce que ledit polymère est un polypropylène isotactique.

Selon encore un mode de réalisation particulier, l'invention se caractérise en ce que l'on utilise un mélange d'au moins un polypropylène isotactique et d'au moins un autre polymère oléfinique cristallin ou amorphe.

Selon encore un mode de réalisation particulier, l'invention se caractérise en ce que l'on utilise un mélange d'au moins un polypropylène isotactique et d'au moins un polyéthylène.

Selon encore un mode de réalisation particulier, l'invention se caractérise en ce que l'on utilise un mélange d'un polypropylène isotactique et d'un polymère oléfinique cristallin comme un polyéthylène.

Selon encore un mode de réalisation particulier, l'invention se caractérise en ce que l'on utilise un mélange d'au moins un polypropylène isotactique et d'au moins un polymère ou co- ou terpolymère oléfinique amorphe ou sensiblement amorphe. On rappellera que « co-polymère » désigne aussi bien des polymères obtenus à partir de deux, trois, quatre, monomères ou plus, dont les terpolymères ne sont qu'un cas particulier. Par « sensiblement amorphe » on désignera des polymères ou copolymères dont le degré de cristallinité est très faible, de l'ordre de moins de 10 ou de moins de 5 %.

Selon encore un mode de réalisation particulier, l'invention se caractérise en ce que l'on utilise un mélange d'au moins un polypropylène isotactique et d'au moins un polymère ou copolymère oléfinique atactique ou sensiblement atactique.

Selon un mode de mise en oeuvre particulier et non limitatif, la partie organique du concentré de charges, c'est à dire le mélange de polymères formant le liant et éventuellement les additifs usuels, est composée :
- de 30 % à 100 % de polypropylène isotactique de très grande fluidité dont le MFI mesuré suivant la norme modifiée NFT 51-620 est supérieur ou égal à 200 g /10 min. (température 190°C, charge 10 kg, filière de 1,05 mm) ;
- de 0 à 70 % de polyoléfines amorphes et/ou cristallines standards tels que le polypropylène, le polyéthylène et en règle générale les polymères et copolymères à base de monomères éthyléniques contenant 2 à 6 atomes de carbone seuls ou en mélange ;
- de 0 à 5 % d'additifs tels que des stabilisants thermiques, des antioxydants, des anti-UV, des dispersants, des lubrifiants, des colorants, des plastifiants, des antistatiques,des ignifugeants, des agents de nucléation bien connus de l'homme de l'art, des agents passivant les métaux comme par exemple les agents cupropassifs et autres.

Selon un mode de réalisation préféré, on utilisera des polypropylènes isotactiques préparés par polymérisation directe.

L'invention concerne également les mélange-maîtres obtenus par ledit procédé.

Les mélange-maîtres selon l'invention se caractérisent en ce qu'ils contiennent une teneur en charges minérales égale à 80 % en poids, en ce qu'ils possèdent une fluidité ou MFI supérieur ou égal à 5 g/10 min (190°C - 5 kg - 2,09 mm) mesuré selon la norme NF T 51-620, de préférence supérieur ou égal à 8 g/10 min (190°C - 5 kg -2,09 mm), et en ce qu'ils contiennent au moins un polymère de type polypropylène isotactique présentant un pourcentage de cristallinité (appelé aussi indice d'isotacticité) supérieur à environ 20 %, préférentiellement compris entre 30 % et 90 %, très préférentiellement compris entre 50 % et 85 %, mesuré par la méthode DSC telle que précédemment décrite.

Selon encore un mode de réalisation particulier, l'invention se caractérise en ce que la ou les charge(s) minérales sont choisies parmi les carbonates tels que les carbonates de calcium naturel dont notamment les différentes craies, calcites, marbres ou encore parmi les carbonates synthétiques tels que les carbonates de calcium précipité à différents stades de cristallisation ou encore sont choisies parmi les sels mixtes de magnésium et de calcium tels que les dolomies ou encore parmi le carbonate de magnésium, le carbonate de zinc, la chaux, la magnésie, le sulfate de baryum tel que notamment la baryte, le sulfate de calcium, la silice, les silico-magnésiens tels que le talc, la wollastonite, les argiles et autres silico-alumineux tels que les kaolins, le mica, les oxydes ou hydroxydes de métaux ou d'alcalino-terreux tels que l'hydroxyde de magnésium, les oxydes de fer, l'oxyde de zinc, la fibre ou la poudre de verre, la fibre ou de poudre de bois, les pigments minéraux ou organiques ou les mélanges de ces composés, notamment les mélanges de talc et de carbonates ou encore les mélanges d'oxyde de titane et de carbonates, mélanges effectués avant ou après le broyage des minéraux.

Ces charges peuvent être éventuellement traitées avant leur mise en oeuvre par un ou plusieurs agents dont notamment l'acide céthylique, l'acide stéarique, l'acide béhénique, les mélanges des dits acides avec leurs sels de calcium ou de zinc, les phosphates, les phosphonates, les sulfates et les sulfonates organiques.

De manière encore plus particulière, ces charges sont choisies parmi les carbonates préalablement traités ou non tels que les carbonates de calcium naturel dont les différentes craies, calcites, marbres ou parmi les carbonates synthétiques tels que les carbonates de calcium précipité, ou encore parmi le talc, l'hydroxyde de magnésium, la baryte, le dioxyde de titane, la wollastonite ou les dolomies et leurs mélanges.

Des exemples de nature de charges sont décrits de manière détaillée dans, par exemple, le brevet EP 0 203 017 ou encore des exemples de forme et taille de particules sont précisés dans, par exemple, la demande de brevet WO 95/17441 et sont de toute manière très bien connus de l'homme du métier.

L'invention concerne également un procédé pour préparer des concentrés de charges selon l'invention, caractérisé en ce que l'on effectue un mélange, en une ou plusieurs fois, de la masse de charge(s) et du polymère ou du mélange de polymères selon l'invention, et en ce que le concentré peut contenir 80 % en poids de charge(s).

L'invention concerne encore un procédé pour préparer des matières thermoplastiques chargées à l'aide de charge(s) minérale(s) caractérisé en ce que l'on procède au mélange de ladite ou desdites matières thermoplastiques avec un mélange-maître encore appelé concentré de charge(s) préparé selon l'invention.

Ces matières thermoplastiques mises en oeuvre avec le mélange-maître selon l'invention sont choisies parmi les polyéthylènes basse densité, linéaires ou ramifiés, ou les polyéthylènes haute densité, les polypropylènes homo- ou copolymères, les polyisobutylènes et les copolymères obtenus lors de la polymérisation de deux au moins des co-monomères éthylène, propylène, isobutylène, les polyoléfines modifiées par greffage telles que les polyoléfines greffées anhydride maléique ou par copolymérisation comme par exemple les polyoléfines halogénées, les polypropylènes modifiés EPDM (éthylène, propylène, diène, monomère), les polypropylènes modifiés SEBS (styrène, éthylène, butylène, styrène) ou encore de deux au moins des polymères et copolymères précités, en mélange, ou encore les caoutchoucs ou élastomères naturels ou synthétiques et thermoplastiques, parmi ces derniers notamment les caoutchoucs SBR (caoutchouc styrène-butadiène) ou EPDM ou SEBS thermoplastiques.

On pourra incorporer selon ce procédé des additifs usuels bien connus de l'homme du métier, adaptés aux applications finales.

L'invention concerne enfin les utilisations de ces mélange-maîtres, éventuellement sous forme d'agrégats ou de granulés, pour fabriquer des articles industriels, notamment des articles industriels moulés ainsi que les objets moulés obtenus.

Les modes de transformation de ces mélange-maîtres peuvent être également l'extrusion et notamment l'extrusion d'un film, d'un film microporeux, d'une gaine ou d'un tube ou d'un profilé, l'extrusion soufflage, l'extrusion de bandelettes ou de feuilles ou encore l'extrusion couchage sur papier ou feuille métallique, ou encore peuvent être le thermoformage, l'injection, le calandrage, la fabrication de fils et de câbles et autres modes connus de l'homme du métier.

### EXEMPLE 1

La sélection de polypropylène isotactique, de fluidité élevée et supérieure ou égale à un MFI de 200 g/10 min, mesuré suivant la norme modifiée NF T 51-620 (190°C - 10 kg - 1,05 mm), de préférence supérieure à 500 g/10 min., mesuré suivant la norme modifiée NF T 51-620 (190°C - 10 kg - 1,05 mm), avec un pourcentage de cristallinité supérieur à environ 20 %, préférentiellement compris entre 30 % et 90 %, très préférentiellement entre 50 % et 85 %, permet l'obtention de mélange-maîtres qui contiennent une teneur en charge égale à 80 %, qui possèdent une fluidité élevée, c'est-à-dire de MFI supérieur ou égal à 5 g/10 min (190°C- 5 kg-2,09 mm) mesuré selon la norme NF T 51-620 et qui contiennent au moins un polymère de type polypropylène isotactique présentant un pourcentage de cristallinité (appelé aussi indice d'isotacticité) supérieur à environ 20 %, préférentiellement compris entre 30 % et 90 %, très préférentiellement compris entre 50 % et 85 %, mesuré par la méthode DSC telle que précédemment décrite.

### EXEMPLE 2

La mise en oeuvre de polypropylène isotactique, de fluidité élevée et supérieure ou égale à un MFI de 200 g/10 min, mesuré suivant la norme modifiée NF T 51-620 (190°C - 10 kg - 1,05 mm), de préférence supérieure à 500 g/10 min., mesuré suivant la norme modifiée NF T 51-620 (190°C - 10 kg - 1,05 mm), avec un pourcentage de cristallinité supérieur à environ 20 %, préférentiellement compris entre 30 % et 90 %, préférentiellement entre 50 % et 85 %, permet l'obtention de mélange-maîtres qui contiennent différentes charges minérales et avec une teneur en charge égale à 80 %, et qui possèdent une fluidité élevée, c'est-à-dire de MFI supérieur ou égal à 5 g/10 min. (190°C - 5 kg - 2,09 mm) mesuré selon la norme NF T 51-620 et qui contiennent au moins un polymère de type polypropylène isotactique présentant un pourcentage de cristallinité (appelé aussi indice d'isotacticité) supérieur à environ 20 %, préférentiellement compris entre 30 % et 90 %, très préférentiellement compris entre 50 % et 85 %, mesuré par la méthode DSC telle que précédemment décrite.

De plus, il peut être remarqué que le couplage du polypropylène isotactique à grande fluidité avec un ou plusieurs polymères permet :
- un réglage de la fluidité du concentré de charge dans le but de réaliser des mélanges avec des charges de différentes natures et aux caractéristiques très différentes les unes par rapport aux autres telles que notamment la granulométrie, d'adapter la formule au procédé,
- d'augmenter la compatibilité du concentré de charge avec le milieu dans lequel il doit être dispersé,
- d'obtenir une formule moins onéreuse,
- un réglage de la dureté des concentrés.

Pour les modalités pratiques et les applications des exemples de l'invention, l'homme de métier pourra se reporter utilement à la demande principale EP n° 01 907 801.3.

## Revendications

1. Procédé pour la préparation de mélange-maîtres ou concentrés de charge(s) minérale(s) fortement chargés en matière(s) ou charge(s) minérale(s), utilisables pour charger des matières thermoplastiques à l'aide desdites charges minérales, mettant en oeuvre des polymères ou des mélanges de polymères comme liant, **caractérisé en ce que** lesdits polymères ou mélanges de polymères :
- comprennent au moins un polypropylène isotactique de très grande fluidité,
- ont un pourcentage de cristallinité communément appelé indice d'isotacticité supérieur à environ 20 %, préférentiellement compris entre 30 % et 90 %, très préférentiellement compris entre 50 % et 85 %, mesuré par la méthode DSC,
- **en ce que** la teneur en charge minérale du mélange-maître est égale à 80% en poids, et
- **en ce que** lesdits polymères ou mélanges de polymères présentent un indice de fluidité encore appelé MFI (Melting Flow Index) supérieur ou égal à 200 g/10 min., mesuré suivant la norme modifiée NF T 51-620 (190°C - 10 kg - 1,05 mm).

2. Procédé pour la préparation de mélange-maîtres ou concentrés de charge(s) minérale(s) fortement chargés en matière(s) ou charge(s) minérale(s) selon la revendication 1, **caractérisé en ce que** lesdits polymères ou mélanges de polymères présentent un indice de fluidité supérieur ou égal à 500 g/10 min., mesuré suivant la norme modifiée NF T 51-620 (190°C - 10 kg - 1,05 mm).

3. Procédé pour la préparation de mélange-maîtres ou concentrés de charge(s) minérale(s) fortement chargés en matière(s) ou charge(s) minérale(s) selon la revendication 1, **caractérisé en ce que** la partie organique du concentré de charges, c'est à dire le mélange de polymères formant le liant et éventuellement les additifs usuels, est composée :
- de 30 % à 100 % de polypropylène isotactique de très grande fluidité dont le MFI mesuré suivant la norme modifiée NFT 51-620 est supérieur ou égal à 200 g/10 min. (température 190°C, charge 10 kg, filière de 1,05 mm) ;
- de 0 à 70 % de polyoléfines amorphes et/ou cristallines choisies parmi le polypropylène, le polyéthylène et les polymères ou copolymères à base de monomères éthyléniques contenant 2 à 6 atomes de carbone seuls ou en mélange ;
- de 0 à 5 % d'additifs tels que des stabilisants thermiques, des antioxydants, des anti-UV, des dispersants, des lubrifiants, des colorants, des plastifiants, des antistatiques, des ignifugeants, des agents de nucléation, des agents passivant les métaux tels que les agents cupropassifs.

4. Procédé pour la préparation de mélange-maîtres ou concentrés de charge(s) minérale(s) fortement chargés en matière(s) ou charge(s) minérale(s) selon l'une quelconque des revendications 1 à 3 **caractérisé en ce que** ledit polymère est un polypropylène isotactique de très grande fluidité.

5. Procédé pour la préparation de mélange-maîtres ou concentrés de charge(s) minérale(s) fortement chargés en matière(s) ou charge(s) minérale(s) selon l'une quelconque des revendications 1 à 3 **caractérisé en ce que** lesdits polymères ou mélange de polymères sont constitués d'au moins un polypropylène isotactique de très grande fluidité et d'au moins un autre polymère oléfinique cristallin ou amorphe.

6. Procédé pour la préparation de mélange-maîtres ou concentrés de charge(s) minérale(s) fortement chargés en matière(s) ou charge(s) minérale(s) selon la revendication 5 **caractérisé en ce que** l'autre polymère oléfinique cristallin ou amorphe est un polyéthylène.

7. Procédé pour la préparation de mélange-maîtres ou concentrés de charge(s) minérale(s) fortement chargés en matière(s) ou charge(s) minérale(s) selon la revendication 5 **caractérisé en ce que** lesdits polymères ou mélange de polymères sont constitués d'un polypropylène isotactique de très grande fluidité et d'un polyéthylène.

8. Procédé pour la préparation de mélange-maîtres ou concentrés de charge(s) minérale(s) fortement chargés en matière(s) ou charge(s) minérale(s) selon l'une quelconque desrevendications 1 à 2 **caractérisé en ce que** lesdits polymères ou mélange de polymères sont constitués d'au moins un polypropylène isotactique de très grande fluidité et d'au moins un autre copolymère ou terpolymère oléfinique amorphe ou atactique ou sensiblement amorphe ou sensiblement atactique.

9. Mélange-maître ou concentré de charge(s) minérale(s) fortement chargés en matière(s) ou charge(s) minérale(s) **caractérisé en ce qu'**il contient une teneur en charge minérale égale à 80 % en poids, **en ce qu'**il possède un indice de fluidité ou MFI supérieur ou égal à 5 g/10 min. (190°C - 5 kg - 2,09 mm) mesuré selon la norme NF T 51-620, de préférence supérieur ou égal à 8 g/10 min. (190°C - 5 kg - 2,09 mm), et **en ce qu'**il contient au moins un polymère de type polypropylène isotactique de très grande fluidité présentant un pourcentage de cristallinité (appelé aussi indice d'isotacticité) supérieur à environ 20 %, préférentiellement compris entre 30 % et 90 %, très préférentiellement compris entre 50 % et 85 %, mesuré par la méthode DSC.

10. Mélange-maître ou concentré de charge(s) minérale(s) fortement chargés en matière(s) ou charge(s) minérale(s) selon la revendication 9 **caractérisé en ce que** la ou les charge(s) minérales traitées ou non sont choisies parmi les carbonates tels que les carbonates de calcium naturel dont les différentes craies, calcites, marbres ou parmi les carbonates synthétiques tels que les carbonates de calcium précipité à différents stades de cristallisation ou encore sont choisies parmi les sels mixtes de magnésium et de calcium tels que les dolomies ou encore parmi le carbonate de magnésium, le carbonate de zinc, la chaux, la magnésie, le sulfate de baryum tel que notamment la baryte, le sulfate de calcium, la silice, les silico-magnésiens tels que le talc, la wollastonite, les argiles et autres silico-alumineux tels que les kaolins, le mica, les oxydes ou hydroxydes de métaux ou d'alcalino-terreux tels que l'hydroxyde de magnésium, les oxydes de fer, l'oxyde de zinc, la fibre ou la poudre de verre, la fibre ou de poudre de bois, les pigments minéraux ou organiques ou les mélanges de ces composés tels que les mélanges de talc et de carbonates ainsi que les mélanges d'oxyde de titane et de carbonates, mélanges effectués avant ou après le broyage des minéraux.

11. Mélange-maître ou concentré de charge(s) minérale(s) fortement chargés en matière(s) ou charge(s) minérale(s) selon la revendication 10 **caractérisé en ce que** la ou les charge(s) minérales traitées ou non sont choisies parmi les carbonates de calcium naturel dont les différentes craies, calcites, marbres ou parmi les carbonates synthétiques tels que les carbonates de calcium précipité, ou encore parmi le talc, l'hydroxyde de magnésium, la baryte, le dioxyde de titane, la wollastonite ou les dolomies et leurs mélanges.

12. Procédé pour préparer des matières thermoplastiques chargées à l'aide de charge(s) minérale(s), **caractérisé en ce que** l'on effectue un mélange, en une ou plusieurs fois, de ladite ou desdites matières thermoplastiques avec un mélange-maître selon l'une quelconque des revendications 9 à 11 **caractérisé en ce que** ladite ou lesdites matières thermoplastiques sont choisies parmi les polyéthylènes basse densité, linéaires ou ramifiés, ou les polyéthylènes haute densité, les polypropylènes homo- ou copolymères, les polyisobutylènes et les copolymères obtenus lors de la polymérisation de deux au moins des co-monomères éthylène, propylène, isobutylène, les polyoléfines modifiées par greffage telles que les polyoléfines greffées anhydride maléique ou par copolymérisation telles que les polyoléfines halogénées, les polypropylènes modifiés EPDM (éthylène, propylène, diène, monomère), les polypropylènes modifiés SEBS (styrène, éthylène, butylène, styrène) ou encore de deux au moins des polymères et copolymères précités, en mélange, ou encore les caoutchoucs ou élastomères naturels ou synthétiques et thermoplastiques, parmi ces derniers notamment les caoutchoucs SBR (caoutchouc styrène-butadiène) ou EPDM ou SEBS thermoplastiques.

13. Utilisation de mélange-maîtres selon l'une quelconque des revendications 9 à 11, éventuellement sous forme d'agrégats ou de granulés, pour fabriquer des articles industriels moulés, par thermoformage ou injection.

14. Utilisation de mélange-maîtres selon l'une quelconque des revendications 9 à 11, éventuellement sous forme d'agrégats ou de granulés, pour l'extrusion et notamment d'un film, d'une gaine ou d'un tube ou d'un profilé, ou des fils et des câbles, pour l'extrusion soufflage, l'extrusion de bandelettes ou de feuilles ou encore l'extrusion couchage sur papier ou feuille métallique.

15. Utilisation de mélange-maîtres selon l'une quelconque des revendications 9 à 11, éventuellement sous forme d'agrégats ou de granulés, pour le calandrage.

16. Objets moulés, extrudés ou calandrés obtenus par la mise en oeuvre de mélange-maîtres selon l'une quelconque des revendications 9 à 11.
